Europäisches Patentamt

European Patent Office

Office européen des brevets

(11) Veröffentlichungsnummer: **0 099 107**
**A1**

## (12) EUROPÄISCHE PATENTANMELDUNG

(21) Anmeldenummer: 83106824.2

(22) Anmeldetag: 12.07.83

(51) Int. Cl.³: **B 23 G 5/06**

(30) Priorität: 14.07.82 DE 3226355

(43) Veröffentlichungstag der Anmeldung:
25.01.84 Patentblatt 84/4

(84) Benannte Vertragsstaaten:
CH DE FR GB IT LI NL SE

(71) Anmelder: Ernst Reime GmbH & Co. KG Spezialfabrik
für Präzisionsgewindeschneidwerkzeuge
Bartholomäusstrasse 26
D-8500 Nürnberg(DE)

(72) Erfinder: Gärtner, Hans, Dr.-Ing.
Am Weinberg 6
D-8501 Schwaig 2(DE)

(74) Vertreter: Tergau, Enno et al,
Patentanwälte Tergau & Pohl Postfach 11 93 47
Hefnersplatz 3
D-8500 Nürnberg 11(DE)

(54) Gewindebohrer.

(57) Bei einem Gewindebohrer mit hinterschliffenen Zahnflanken im Anschnitteil (4) und im Führungsteil (5) ist der Flankendurchmesser (16) des Führungsteils (5) gegenüber dem Flankendurchmesser (14) des Anschnitteils (4) um ein Maß (15) abgesetzt, welches kleiner ist als der Hinterschliff (11) der Gewindeflanken des Anschnitteiles (4). Dabei ist der Hinterschliff (20) der Gewindeflanken des Führungsteiles (5) - bezogen auf den Flankendurchmesser (14) des Anschnitteiles (4) - gleichgroß wie der Hinterschliff (11) der Gewindeflanken des Anschnitteiles (4). Der Gewindeflankenverlauf im Führungsteil (5) entgegengesetzt zur Schnittrichtung ist abwechselnd zylindrisch und hinterschnitten mit stetiger Annäherung an die Gewindebohrerachse.

FIG.2

Ernst Reime GmbH & Co KG
Spezialfabrik für Präzisions-Gewindeschneidwerkzeuge,
Bartholomäusstr. 26, 8500 Nürnberg 1

<u>Gewindebohrer</u>

Die Erfindung betrifft einen Gewindebohrer mit den im Oberbegriff des Anspruches 1 aufgeführten Merkmalen.

Es sind genutete und hinterschliffene Gewindebohrer bekannt, bei denen der Hinterschliff ohne Änderung des Flankendurchmessers über Anschnitt- und Führungsteil verläuft. Bei dieser Aussage blieb die in der Praxis übliche Verjüngung (Konizität) des Flankendurchmessers zum Schaft hin unberücksichtigt.

Weiterhin ist es bekannt, den Flankendurchmesser des Führungsteiles eines im Anschnitteil hinterschliffenen Gewindebohrers um das Maß des Hinterschliffes abzusetzen und das Gewinde im Führungsteil zylindrisch verlaufen zu lassen. Dies trifft in erster Linie bei nur über etwa die Anschnittlänge genutete Gewindebohrer zu. Je größer das Maß des Hinterschliffes im Anschnittteil ist, um so problematischer werden bei diesem Gewindebohrer die Führungseigenschaften des Führungsteiles.

Bei einem aus DE-AS 26 25 863 bekannten Gewindebohrer der eingangs genannten Art mit den Merkmalen des Oberbegriffs des Anspruches 1 setzt sich der Hinterschliff des Anschnitteiles in gleicher Größe im Führungsteil fort, jedoch mit der Besonderheit, daß der Flankendurchmesser des Führungsteiles bereits um das Maß des Hinterschliffes des Anschnitteiles abgesetzt ist. Bei derartigen Gewindebohrern liegt im Führungsteil lediglich eine Linienführung vor. Es sind zwar in Einschraubrichtung hinter den linienförmigen Führungsbereichen vergleichsweise großvolumige Öltaschen vorhanden, die ein Schmieren oder Festfressen wirksam vermeiden. Die Führungseigenschaften derartiger Gewindebohrer haben sich jedoch als noch verbesserungsfähig erwiesen.

Der Erfindung liegt die Aufgabe zugrunde, einen Gewindebohrer der eingangs genannten Art so auszubilden, daß er mit Vorteil vor allem bei schwer zu bearbeitenden Werkstoffen, z.B. bei hochlegierten und hochfesten Stählen, einsetzbar ist. Zum Zerspanen derartiger Werkstoffe ist ein vergleichsweise großer Hinterschliff am Gewindebohrer zerspanungstechnisch von erheblichem Vorteil, weil dadurch ein gutes Freischneiden gewährleistet ist. Allerdings geht bei den bekannten Gewindebohrern ein solcher Hinterschliff im Führungsteil zu Lasten von dessen Führungseigenschaften.

Die vorgenannte Aufgabe wird durch die Kennzeichnungsmerkmale des Anspruches 1 gelöst. Bei auch vergleichsweise großem Hinterschliff werden im ungenuteten Führungsteil durch die Erfindung stark ausgeprägte, hintereinanderliegende Taschen zur Aufnahme des Schmiermittels geschaffen, welches bei der Drehung des Werkzeuges mit umläuft und dabei für eine gute Schmierung der in den zylindrischen Gewindeteilen des Führungsbereiches vorhandenen Kontaktflächen zwischen Führungsgewinde und Werkstück sorgt.

Die im Kennzeichnungsmerkmal des Anspruches 2 niedergelegte Größe für den Absatz zwischen dem Flankendurchmesser des Anschnitteiles und dem des Führungsteiles hat sich als besonders vorteilhaft erwiesen, um einen günstigen Kompromiss zwischen den Forderungen nach guten Führungseigenschaften und einem guten Freischneiden des zu zerspanenden Werkstoffes zu schaffen.

Die Erfindung wird anhand eines in den Figuren dargestellten Ausführungsbeispieles näher erläutert. Es zeigen:

Fig. 1 die Seitenansicht eines erfindungsgemäß ausgebildeten Gewindebohrers,

Fig. 2 eine Darstellung des Gewindeprofils dieses Gewindebohrers im Übergangsbereich vom Anschnittteil zum Führungsteil und

Fig. 3 einen Schnitt entsprechend der Linie III-III durch den Führungsteil des Gewindebohrers gemäß Fig. 1.

In gleicher Weise wie beim Ausführungsbeispiel kann die Erfindung auch bei einem Gewindebohrer verwirklicht werden, der die Späne in einem stirnseitig ausgebildeten Hohlraum aufnimmt - genannt Innenspangewindebohrer. Der dargestellte Gewindebohrer 1 besteht im wesentlichen aus dem Schaft 2 und seinem insgesamt mit 3 bezeichneten Schneidkopf. Der Schneidkopf weist einen sich von der Stirnseite 6 her konisch erweiternden Anschnitteil 4 auf, der über einen Absatz 7 in den Führungsteil 5 übergeht. Der Schneidkopf weist zwei

—4—

Spannuten 8 auf, die von der Stirnseite 6 des Anschnitteiles 4 bis in den Führungsteil 5 hineinreichen. Die dargestellte Spannut 8 verläuft achsparallel. Sie kann aber in gleicher Weise auch schräg oder
spiralförmig zur Gewindebohrerachse 10 verlaufen. Das
führungsteilseitige Ende der Spannuten 8 ist mit 9
bezeichnet.

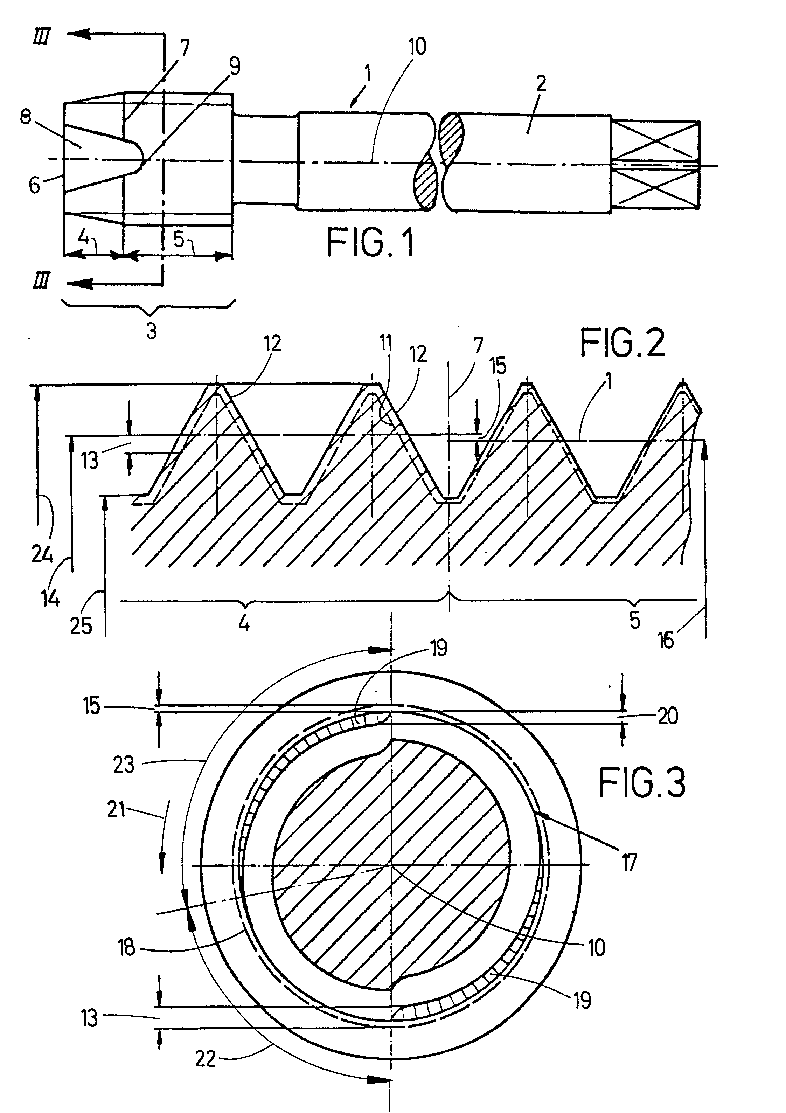

Im Anschnittbereich 4 sind die Zahnflanken hinterschliffen. In Fig. 2 ist der Hinterschliff 11 der
Zähne 12 des Anschnitteiles 4 gestrichelt dargestellt.
Das Maß des Hinterschliffes ist mit 13 bezeichnet.
Entsprechend dem Vorhandensein von zwei Spannuten 8
sind über einen Gewindegang im Anschnitteil 4 zwei
Zähne und damit auch zwei Hinterschliffe 11 angeordnet. Beim Absatz 7 fällt der Flankendurchmesser 14 des
Anschnitteils 4 zum Flankendurchmesser 16 des Führungsteils 5 um das Maß 15 ab, welches kleiner ist als das
Maß des Hinterschliffes 13 im Anschnitteil 4. Dadurch
beschreibt der Flankendurchmesser 16 des Führungsteiles 5 den Flankendurchmesser-Kreisbogen 17, welcher in
Achsprojektion konzentrisch innerhalb des Flankendurchmesser-Kreisbogens 18 des Anschnitteiles 4 liegt.

Der Hinterschliff 19 der Gewindeflanken des Führungsteiles 5 ist auf den Flankendurchmesser 14 des Anschnitteiles 4 bezogen gleichgroß wie der Hinterschliff 13 der Gewindeflanken des Anschnitteiles 4.
Sein Maß gegenüber dem Flankendurchmesser 16 des Führungsteils 5 ist in Fig. 3 mit 20 eingezeichnet.
Dadurch ist der Gewindeflankenverlauf im Führungsteil
5 entgegengesetzt zur Schnittrichtung 21 abwechselnd
zylindrisch (Umfangsbereich 22) und hinterschliffen
mit stetiger Annäherung an die Gewindebohrerachse 10
(Umfangsbereich 23). Bei einem Gewindebohrer mit zwei
Spannuten 8 sind - jeweils einander diametral gegenüberliegend - jeweils zwei zylindrische Umfangsbereiche 22 und zwei hinterschliffene Umfangsbereiche 23 im Führungsteil 5 über den Umfang eines Gewindeganges vorhanden. Durch die Hinterschliffe 19 der Gewindeflanken des Führungsteiles 5 entstehen an den Gewindeflanken jeweils Schmiermitteltaschen zur mit der Drehung des Gewindebohrers mitgehenden Einlage von Schmiermittel. Die Darstellung in Fig. 3 ist nur schematisch und soll der besseren Verdeutlichung dienen. In Wirklichkeit kann das Aussehen dieser Schmiermitteltaschen auch anders sein. Die Anbringung der in Axialrichtung nebeneinanderliegenden Hinterschliffe 19 benachbarter Gewindeflanken im Führungsteil 5 ist entsprechend dem Verlauf der Spannuten 8 im Anschnitteil 4 achsparallel, schräg oder spiralförmig. Zweckmäßigerweise beträgt das Maß 15 des Absatzes 7 zwischen dem Flankendurchmesser 14 des Anschnitteiles 4 und dem Flankendurchmesser 16 des Führungsteiles 5 etwa 30-50 % des Maßes 13 des Hinterschliffes im Anschnitteil 4.

Zur Herstellung der zylindrischen Umfangsbereiche 22 im Führungsteil ist auf herkömmlichen Gewindeschleifmaschinen ein gesonderter Schleifscheibendurchlauf erforderlich. Zunächst wird das Gewinde von Anschnitteil 4 und Führungsteil 5 mit jeweils gleichgroßem (Maß 13) Hinterschliff 11 hergestellt, wobei dieser Hinterschliff vom Anschnitteil 4 ohne Absatz und ohne Änderung des Flankendurchmessers 14 im Führungsteil 5 weiterläuft. Sodann werden im Führungsbereich durch den gesonderten Schleifscheibendurchlauf die zylindrischen Umfangsbereiche 22 geschliffen, wodurch gleichzeitig der Absatz 7 in einer Größe entsteht, die kleiner ist als das Maß 13 des Hinterschliffes 11 im Anschnitteil.

-6-

Wenn hier von einem gesonderten Schleifscheibendurchlauf zur Herstellung der zylindrischen Umfangsbereiche 22 im Führungsteil 5 gesprochen ist, so bedeutet dies keine Einschränkung hinsichtlich der Herstellungsmittel für das erfindungsgemäße Profil im Führungsteil 5. Vielmehr liegt es im Zuge der allgemeinen Werkzeugmaschinenentwicklung, daß die Schleifmaschinensteuerung so erfolgt, daß von vornherein über den gesamten Umfang das erfindungsgemäße Gewindeprofil in den Führungsteil 5 eingeschliffen werden kann. Insofern dienen die Ausführungen im vorangehenden Absatz nur zur besseren Verständlichkeit des Erfindungsgegenstandes.

Der Außendurchmesser des Gewindes im Anschnitteil ist mit 24, der Kerndurchmesser mit 25 gekennzeichnet.

0099107

7

Positionszahlen

1 Gewindebohrer

2 Schaft

3 Schneidkopf

4 Anschnitteil

5 Führungsteil

6 Stirnseite

7 Absatz

8 Spannut

9 Ende

10 Achse

11 Hinterschliff

12 Zahn

13 Maß des Hinterschliffs

14 Flankendurchmesser (Anschnitteil)

15 Maß des Absatzes

16 Flankendurchmesser (Führungsteil)

17 Flankendurchmesser-Kreisbogen (Führungsteil)

18 Flankendurchmesser-Kreisbogen (Anschnitteil)

19 Hinterschliff (Führungsteil)

20 Hinterschliff – Maß

21 Schnittrichtung

22 Umfangsbereich

23 Umfangsbereich hinterschnitten

24 Außendurchmesser

25 Kerndurchmesser

Ernst Reime GmbH & Co KG
Spezialfabrik für Präzisions-Gewindeschneidwerkzeuge,
Bartholomäusstr. 26, 8500 Nürnberg 1

Ansprüche

1. Gewindebohrer mit hinterschliffenen Zahnflanken im Anschnitt- (4) und im Führungsteil (5) und mit sich mindestens über die Länge des Anschnitteiles (4) erstreckenden Spannuten (8), wobei der Flankendurchmesser (16) des Führungsteils (5) gegenüber dem Flankendurchmesser (14) des Anschnitteils (4) abgesetzt ist,

gekennzeichnet durch folgende Merkmale:

a) Der Hinterschliff (20) der Gewindeflanken des Führungsteiles (5) ist in Bezug zum Flankendurchmesser (14) des Anschnitteiles (4) gleichgroß wie der Hinterschliff (11) der Gewindeflanken des Anschnitteils (4).

b) Der Absatz (7) zwischen den Flankendurchmessern (14 bzw. 16) des Anschnitt- (4) und des Führungsteils (5) ist kleiner als der Hinterschliff (11) der Gewindeflanken des Anschnitteils (4).

c) Der Gewindeflankenverlauf im Führungsteil (5) entgegengesetzt zur Schnittrichtung (21) ist abwechselnd zylindrisch (Umfangsbereich 22) und hinterschnitten mit stetiger Annäherung an die Gewindebohrerachse (10) (Umfangsbereich 23).

2. Gewindebohrer nach Anspruch 1,

dadurch gekennzeichnet,

daß der Absatz (7) etwa 30-50 % des Hinterschliffes (11) der Gewindeflanken im Anschnitteil (4) beträgt.

0099107

FIG.1

FIG.2

FIG.3

Europäisches
Patentamt

# EUROPÄISCHER RECHERCHENBERICHT

Nummer der Anmeldung

| | EINSCHLÄGIGE DOKUMENTE | | EP 83106824.2 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE - C - 864 645 (REIME) <br> * Gesamt * <br> -- | 1 | B 23 G 5/06 |
| A | DE - C - 682 423 (MATTHEES) <br> * Gesamt * <br> ---- | 1 | |

**RECHERCHIERTE SACHGEBIETE (Int. Cl. ³)**

B 23 G 5/00

Der vorliegende Recherchenbericht wurde für alle Patentansprüche erstellt.

| Recherchenort | Abschlußdatum der Recherche | Prüfer |
|---|---|---|
| WIEN | 17-10-1983 | FUCHS |

EPA Form 1503 03 82

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

............................................................
& : Mitglied der gleichen Patentfamilie, übereinstimmendes Dokument